# EUROPÄISCHE PATENTSCHRIFT

(11) **EP 2 072 656 B1**
(45) Veröffentlichungstag und Bekanntmachung des Hinweises auf die Patenterteilung: **13.07.2011**
(21) Anmeldenummer: 08105838.0
(22) Anmeldetag: 20.11.2008
(51) Int. Cl.: D06F 58/02, D06F 58/20, D06F 58/26

(54) **Wäschetrocknungsgerät und Verfahren zum Betreiben desselben**
Laundry drying device and method for operating same
Appareil de séchage de linge et procédé de fonctionnement de celui-ci

(30) Priorität: 20.12.2007 DE 102007061520
(43) Veröffentlichungstag der Anmeldung: 24.06.2009
(73) Patentinhaber: BSH Bosch und Siemens Hausgeräte GmbH, 81739 München (DE)
(72) Erfinder: Stolze, Andreas, 14612 Falkensee (DE)

(56) Entgegenhaltungen:
- WO-A-2006/029953
- DE-A1- 4 403 737
- DE-A1-102008 008 805

## Beschreibung

Die Erfindung betrifft ein Wäschetrocknungsgerät, insbesondere einen Ablufttrockner, und ein Verfahren zum Betreiben eines Wäschetrocknungsgeräts.

Aus DE 30 00 865 A1 ist ein Wäschetrockner bekannt, bestehend aus einem die Wäsche aufnehmenden und bewegenden Behälter (Wäschetrommel), in welchen ein von einem Heizelement erwärmter Zuluftstrom mündet, während die feuchte Warmluft als Abluft über einen Auslass abgeführt wird und zur Erzielung der Luftbewegung ein Lüfter vorgesehen ist, wobei ein Wärmetauscher im Zuluftstrom vor dem Heizelement angeordnet ist, der außerdem von der feuchtheißen Abluft durchströmt wird.

Günstig für die Wärmetauscher sind große Temperaturdifferenzen zwischen Zuluft und Abluft. Da die Eintrittsbedingungen der Zuluft festgelegt sind, müssen die Trommelaustrittstemperaturen hoch sein. Realisiert werden kann diese Bedingung mit hohen Heizleistungen oder niedrigen Volumenströmen. Um die Trommeleintrittstemperaturen bei niedrigen Volumenströmen nicht über zulässige Grenzwerte steigen zu lassen, werden typischerweise Umluftanteile, die den Luftvolumenstrom über die Heizung erhöhen und damit die Temperaturen senken, eingeführt. Mit diesen Prozessmaßnahmen und zusätzlicher thermischer Isolation ist eine Realisierung der Energieeffizienzklasse B möglich.

Aus der DE 44 03 737 A1 geht eine Wasch- oder Geschirrspülmaschine mit einem Wärmetauscher hervor. Der Wärmetauscher weist einen mit einem Speichermedium zum Speichern latenter Wärmeenergie angefüllten Hohlraum auf. Dieser Hohlraum steht mit den Primär- und Sekundär-Kreisen derart im Wärmekontakt, dass ohne Vermischung der teilnehmenden Medien jeweils zwischen dem Primär-Kreis und dem Speichermedium einerseits wie auch dem Sekundär-Kreis und dem Speichermedium andererseits ein maximal möglicher Wärmeaustausch stattfinden kann.

Aus der WO 2006/029953 A1 geht ein Trocknungsverfahren zur Anwendung in einem Hausgerät, insbesondere einer Geschirrspülmaschine, einem Wäschetrockner oder einem Waschtrockner hervor, bei welchem Verfahren ein Peltier-Element zum Aufnehmen und Abgeben von Wärme eingesetzt wird.

Es ist die Aufgabe der vorliegenden Erfindung, ein Wäschetrocknungsgerät mit einer verbesserten Energieeffizienz bzw. einem weiter reduzierten Energieverbrauch bereitzustellen.

Die Aufgabe wird mittels eines Wäschetrocknungsgeräts und eines Verfahrens nach dem jeweiligen unabhängigen Patentanspruch gelöst. Bevorzugte Weiterbildungen des Wäschetrocknungsgeräts und des Verfahrens sind Gegenstände entsprechender abhängiger Patentansprüche. Hierin jeweils für sich beschriebene bevorzugte Weiterbildungen sind erfindungsgemäß untereinander kombinierbar, soweit technisch möglich, und dies auch dann, wenn kein expliziter Bezug zwischen entsprechenden Patentansprüchen vorliegt. Auch entsprechen bevorzugten Weiterbildungen des Wäschetrocknungsgeräts bevorzugte Weiterbildungen des Verfahrens und umgekehrt auch dann, wenn hierein darauf nicht im Einzelnen hingewiesen ist.

Das Wäschetrocknungsgerät weist eine drehbare Wäschetrommel und einen mit der Wäschetrommel fluidisch (d. h., bezüglich eines Gas- und / oder Flüssigkeitsstroms) verbundenen Prozessluftkanal auf, wobei der Prozessluftkanal mit einer Heizung zum Aufwärmen einer der Wäschetrommel zuzuführenden Zuluft und einem Kühlkörper zum Kühlen einer von der Wäschetrommel abgeführten Abluft ausgerüstet ist. Zusätzlich ist in den Prozessluftkanal ein von der Abluft durchströmbares Wärmerückgewinnungsaggregat eingekoppelt, welches wärmeleitend mit einem benachbart zur Wäschetrommel angeordneten Wärmespeicher verbunden ist.

Die Wärmerückgewinnungsaggregat kann eine beliebige Vorrichtung sein, die in der Lage ist, Wärme aus der feuchtwarmen Abluft abzuleiten und dem Wärmespeicher zuzuleiten. Die vom Wärmerückgewinnungsaggregat dem Wärmespeicher zugeführte Wärme wärmt über diesen wiederum die in der Wäschetrommel enthaltenen Wäsche auf. Durch das obige Wärmetrocknungsgerät wird somit noch mehr der in der Abluft enthaltenen Wärme für eine Wäschetrocknung genutzt. Dadurch ist ein Erreichen der Energieeffizienzklasse A möglich.

Während das Wärmerückgewinnungsaggregat beispielsweise grundsätzlich auch als Wärmepumpe ausgestaltet sein, z. B. mit einem von der Abluft durchströmbaren Verdampferteil und einem mit dem Wärmespeicher wärmeleitend verbundenen Verflüssigerteil, wird es bevorzugt, wenn das Wärmerückgewinnungsaggregat ein Wärmetauscher ist, insbesondere ein Luft/Luft-Wärmetauscher. Alternativ ist eine Wärmekopplung zwischen Wärmetauscher und Wärmespeicher z. B. auch über eine Kühlflüssigkeit möglich.

Es ist zur Erreichung eines effektiven Wärmeübertrags bevorzugt, dass der Wärmespeicher zwischen 2 mm und 5 cm, insbesondere zwischen 3 mm und 3 cm, speziell zwischen 3 mm und 1 cm, besonders bevorzugt ca. 5 mm, von der Wäschetrommel entfernt angeordnet ist.

Es ist zur gut steuerbaren Wärmespeicherung mit hoher Wärmekapazität vorteilhaft und bevorzugt, dass der Wärmespeicher ein Latentwärmespeicher ist.

Es ist insbesondere bevorzugt, dass der Latentwärmespeicher mindestens ein Latentwärmespeichermaterial mit einem Schmelzpunkt zwischen 30 °C und 60 °C aufweist, z. B. Natriumsulfat (Schmelzpunkt = 32 °C), Natriumthiosulfat (Schmelzpunkt = 48,5 °C) und / oder Natriumacetat (Schmelzpunkt = 58 °C). Alternativ zu den genannten Salzen sind beispielsweise Paraffine einsetzbar.

Das Wäschetrocknungsgerät ist bevorzugt als Umluftkondensationstrockner ausgestaltet, z. B. im Rahmen eines Waschvolltrockners, der Prozessluftkanal ist dann typischerweise als reiner Umluftkanal ausgestaltet, wobei aus der Wäschetrommel abgesaugte Abluft im Prozessluftkanal abgekühlt und somit kondensiert wird und folgend an der Heizung aufgewärmt und als warme Zuluft wieder der Wäschetrommel zugeführt wird. Alternativ kann der Prozessluftkanal einen Zuluftkanal von einem Zulufteinlass der Wäschetrommel und einen Abluftkanal von der Wäschetrommel zu einem Abluftauslass aufweist, wie es für einen Ablufttrockner typisch ist. Das Wärmerückgewinnungsaggregat ist in den Abluftkanal eingekoppelt, was im Fall eines Umlufttrockners als derjenige Prozesskanalabschnitt definiert sein kann, der von einer Ansaugöffnung von der Wäschetrommel bis zur Heizung reicht.

Zur Erreichung eines hohen Wärmerückgewinnungsgrads weist das Wäschetrocknungsgerät, insbesondere Ablufttrockner, bevorzugt außerdem einen Wärmetauscher auf, welcher sowohl in den Abluftkanal als auch in den Zuluftkanal vor einer dort angeordneten Heizung eingekoppelt ist und Wärme von der feuchtwarmen Abluft auf die Zuluft überträgt. Dabei ist es für eine kompakte Bauweise und geringe Herstellungskosten vorteilhaft und bevorzugt, dass die beiden Wärmetauscher als eine Einheit ausgeführt sind.

Zur Einstellung einer Temperatur am Zulufteinlass zur Wäschetrommel ist es vorteilhaft und bevorzugt, dass der Prozessluftkanal zumindest teilweise als Umluftkanal ausgestaltet ist, bzw. einen solchen zwischen Abluftkanal und Zuluftkanal aufweist.

Es ist zur Steuerung der Art der Prozessluftführung, z. B. in Abhängigkeit von der Jahreszeit, ferner bevorzugt, wenn der Zulufteinlass und der Abluftauslass wahlweise öffenbar und verschließbar sind.

Ein Verfahren zum Betreiben eines solchen Wäschetrocknungsgeräts weist die folgenden Schritte auf: Anschalten der Heizung, bis der Wärmespeicher zumindest größtenteils mit einer für einen vorliegenden Trocknungsbetrieb möglichen Wärmemenge aufgeladen ist, gefolgt von einem Ausschalten der Heizung, bis die im Wärmespeicher gespeicherte Wärme zumindest größtenteils abgegeben ist. Nach Ausschalten der Heizung sinken die Temperaturen der Wäschetrommel und damit der Frischluft unter die des Wärmespeichers, so das die im Wärmespeicher gespeicherte Wärme zur Entfeuchtung der Wäsche auf niedrigerem Temperaturniveau bis zur Entladung des Wärmespeichers abgeben werden kann. Dies ist ein besonders energiesparendes Verfahren. Es kann beispielsweise als eigenes Trocknungsprogramm oder als zusätzliche Option für ein vorhandenes Trocknungsprogramm verwendet werden.

Es ist insbesondere zur Wärmeabgabe auf konstantem Temperaturniveau (Schmelztemperatur des Latentwärmespeichermaterials) bevorzugt, dass der Wärmespeicher ein Latentwärmespeicher ist und die aufgeladene bzw. abgegebene Wärme eine latente Wärme ist.

Vorzugsweise können die obigen Schritte mehrfach wiederholt werden.

Anhand des folgenden Ausführungsbeispiels wird die Erfindung schematisch näher erläurtert.

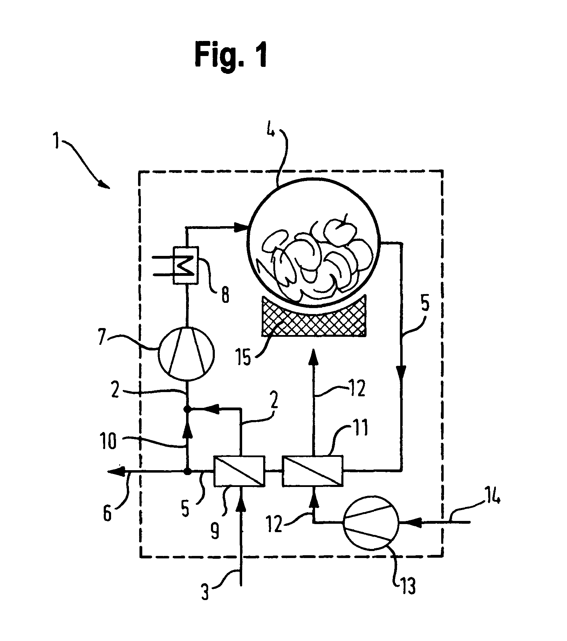

- FIG 1: zeigt eine Prinzipskizze eines Wäschetrocknungsgeräts.

FIG 1 zeigt eine Prinzipskizze eines Wäschetrocknungsgeräts in Form eines Ablufttrockners 1. Der Ablufttrockner 1 weist einen Zuluftkanal 2 auf, der von einem Zulufteinlass 3 zu einer Wäschetrommel 4 führt, und einen Abluftkanal 5, der von der Wäschetrommel 4 abgeht und zu einem Abluftauslass 6 führt. Im bzw. am Zuluftkanal 2 befinden sich ein Prozessluftgebläse 7 zum Einblasen von aus dem Zulufteinlass 3 angesaugter Umgebungsluft in die Wäschetrommel 4, als auch eine dem Prozessluftgebläse 7 (luft)-stromabwärts bzw. nachgeschaltet angeordnete Heizung 8 zum Erwärmen der Zuluft vor Eintritt in die Wäschetrommel 4. Ferner ist ein erster Wärmetauscher ("Vorwärmetauscher") 9 vorhanden, welcher einerseits in den Abluftkanal 5 eingekoppelt ist, und andererseits in den Zuluftkanal 2 vor (stromaufwärts) der Heizung 8, in der gezeigten Ausführungsform auch vor dem Gebläse 7.

Beim Vorwärmetauscher 9 strömt Zuluft in der Regel mit Umgebungsbedingungen (z. B. 20°C und 60% relativer Luftfeuchte) in die Wärmetauscherflächen und wird dort unter Abkühlung der warmen Abluft aufgeheizt. Günstig für Wärmetauscher im Allgemeinen sind große Temperaturdifferenzen zwischen beiden Zweigen, hier also zwischen Zuluft und Abluft. Da die Eintrittsbedingungen der Zuluft festgelegt sind, sollten daher die Austrittstemperaturen der Abluft aus der Wäschetrommel 4 hoch sein. Dies kann durch hohe Heizleistungen der Heizung 8 oder durch niedrige Volumenströme erreicht werden. Um gleichzeitig die Eintrittstemperaturen der Zuluft in die Wäschetrommel 4 bei niedrigen Volumenströmen nicht über zulässige Grenzwerte steigen zu lassen, werden Umluftanteile, die den Luftvolumenstrom über die Heizung 8 erhöhen und damit die Temperaturen senken, eingeführt. Dazu ist hier ein Umluftabzweig 10 vorgesehen, welcher den Abluftkanal 5 mit dem Zuluftkanal 2 verbindet, und zwar jeweils stromabwärts des Vorwärmetauschers 9.

Bei der bisher beschriebenen Anordnung wird Zuluft in den Zuluftkanal 2 eingesaugt und zunächst mittels des Vorwärmetauschers 9 unter Wärmeabgabe von der Abluft aufgewärmt. Danach wird die vorgewärmte Prozessluft durch das Gebläse zur Heizung geführt, wo sie weiter aufgeheizt wird. Danach wird die Zuluft in die Wäschetrommel 4 über die dort enthaltene Wäsche geführt, bei feuchter Wäsche unter Wärmeabgabe. Die nun feuchte Luft wird als Abluft in den Abluftkanal 5 und dabei durch den Vorwärmetauscher 9 geblasen, wo sie unter Wärmeabgabe abkühlt und zumindest teilweise auskondensiert. Die so gekühlte und getrocknete Abluft wird durch den Abluftauslass 6 nach Außen geführt.

Bei dem gezeigten Wäschetrockner 1 ist nun zusätzlich ein zweiter Wärmetauscher ("Zusatzwärmetauscher") 11 im bzw. am Abluftkanal 5 eingekoppelt bzw. angeordnet. Dieser Zusatzwärmetauscher 11 ist ebenfalls ein Kreuzstromwärmetauscher, bei dem der bezüglich der Abluft zweite Luftstrom bzw. Austauschluftstrom ebenfalls ein Zuluftstrom bzw. Frischluftstrom ist. Dazu ist der Zusatzwärmetauscher 11 außer in den Abluftkanal 5 auch in einen Frischluftkanal 12 eingekoppelt, welcher ein eigenes Frischluftgebläse 13 zum Ansaugen von Frischluft von einem Frischlufteinlass 14 zum Zusatzwärmetauscher 11 und weiter zu einem nahe (ca. 5 mm) an der Wäschetrommel 4 angeordneten Latentwärmespeicher 15 aufweist.

Im Zusatzwärmetauscher 11 wird die im Abluftkanal 5 geführte Abluft unter Wärmeabgabe an die im Frischluftkanal 12 geführte Frischluft abgekühlt. Die dann aufgewärmte Frischluft wärmt folgend den Latentwärmespeicher 15 auf. Eingesetzt wird hier ein Latentwärmespeicher 15 auf Basis von Natriumsalzhydraten, wobei der Phasenwechsel fest/flüssig bei konstanter Temperatur und hoher Energiedichte zur Speicherung ausgenutzt wird. Die Entladetemperatur des Latentwärmespeichers 15 ist mittels Volumenstroms und Leistung des Zusatzwärmetauschers 11 auf die Frischluft-Austrittstemperatur abgestimmt. Sie liegt, abhängig vom benutzten Salz, zwischen 30 und 55°C.

Bei einem möglichen Trocknungsablauf wird zunächst der Latentwärmespeicher 15 durch den Zusatzwärmetauscher 11 bzw. über den Frischluftkanal 12 aufgeladen. Ist der Speicher 15 geladen und der Phasenwechsel nahezu abgeschlossen, wird die Heizung 8 abgeschaltet. Die Temperaturen der Wäschetrommel 4 und damit der Frischluft sinken dann unter die des Wärmespeichers 15, so das die im Latentwärmespeicher 15 gespeichert Wärme zur Entfeuchtung der Wäsche auf niedrigerem, aber konstanten Temperaturniveau (Schmelztemperatur des Latentwärmespeichermaterials) bis zur Entladung des Wärmespeichers 15 abgeben kann. Gegebenenfalls wird dazu das Frischluftgebläse 13 abgeschaltet. Darauf folgend wird die Heizung 8 wieder zugeschaltet, bis der Latentwärmespeicher 15 für den nächsten Abschaltzyklus wieder aufgeladen ist. Da dieser Energiesparmodus mit etwas längeren Trocknungszeiten eine Steuerungsvariante ist, kann er ein wählbares Sonderprogramm sein.

Durch den weiteren Wärmetauscher 11 im Prozessluftkanal und den Latentwärmespeicher 15 lässt sich die Energieeffizienzklasse A erreichen.

Bei dem gezeigten Wäschetrocknungsgerät 1 ist es zudem möglich, die Zuluftöffnung 3 und die Abluftöffnung 6 wahlweise zu schließen. Dann entsteht bei gleicher Betriebsweise ein Kondensationstrockner mit einem um die Wirkung des Latentwärmespeichers 15 verringerten Energieverbrauch. Im Sinne der Gesamtenergiebilanz über den Aufstellort sollte bei einem dann möglichen Kombigerät die Kondensationsvariante bevorzugt im Winter und die Abluftvariante im Sommer betrieben werden.

Selbstverständlich ist die vorliegende Erfindung nicht auf das Ausführungsbeispiel beschränkt. Insbesondere ist die vorliegende Erfindung auch auf andere Arten von Trocknungsgeräten, wie Umluftkondensationstrockner und Wärmepumpentrockner, und auch auf Waschvolltrockner, anwendbar. Beispielsweise kann statt eines Vorwärmetauschers in Form eines Luft/Luft-Wärmetauschers auch jedes andere geeignete Aggregat zur Wärmerückgewinnung verwendet werden, z. B. ein Luft/Flüssigkeits-Wärmetauscher oder auch jede Art einer Wärmepumpe.

Der Zusatzwärmetauscher kann allgemein vor oder hinter dem Vorwärmetauscher zur Wärmerückgewinnung sitzen. Auch kann beispielsweise der Umluftabzweig vor, zwischen oder nach beiden Wärmetauschern angeordnet sein. Es ist ferner möglich, beide Wärmetauscher als ein Bauteil auszubilden, das zweiseitig ohne Vermischung beströmt wird.

### Bezugszeichenliste

1 Ablufttrockner
2 Zuluftkanal
3 Zulufteinlass
4 Wäschetrommel
5 Abluftkanal
6 Abluftauslass
7 Prozessluftgebläse
8 Heizung
9 Vorwärmetauscher
10 Umluftabzweig
11 Zusatzwärmetauscher
12 Frischluftkanal
13 Frischluftgebläse
14 Frischlufteinlass
15 Latentwärmespeicher

## Patentansprüche

1. Wäschetrocknungsgerät (1), aufweisend eine drehbare Wäschetrommel (4) und einen mit der Wäschetrommel (4) fluidisch verbundenen Prozessluftkanal (2,5), wobei der Prozessluftkanal (2,5) mit einer Heizung (8) zum Aufwärmen einer der Wäschetrommel (4) zuzuführenden Zuluft und einem Kühlkörper (9) zum Kühlen einer von der Wäschetrommel (4) abgeführten Abluft ausgerüstet ist, **dadurch gekennzeichnet, dass** in den Prozessluftkanal (5) ein von der Abluft durchströmbares Wärmerückgewinnungsaggregat (11) eingekoppelt ist, welches wärmeleitend mit einem benachbart zur Wäschetrommel (4) angeordneten Wärmespeicher (15) verbunden ist.

2. Wäschetrocknungsgerät (1) nach Anspruch 1, **dadurch gekennzeichnet, dass** das Wärmerückgewinnungsaggregat einen Wärmetauscher (11), insbesondere einen Luft/Luft-Wärmetauscher, umfasst.

3. Wäschetrocknungsgerät (1) nach einem der vorhergehenden Ansprüche, **dadurch gekennzeichnet, dass** der Wärmespeicher (15) zwischen 2 mm und 3 cm, insbesondere zwischen 3 mm und 1 cm, speziell ca. 5 cm, von der Wäschetrommel (4) entfernt angeordnet ist.

4. Wäschetrocknungsgerät (1) nach einem der vorhergehenden Ansprüche, **dadurch gekennzeichnet, dass** der Wärmespeicher einen Latentwärmespeicher (15) umfasst.

5. Wäschetrocknungsgerät (1) nach Anspruch 4, **dadurch gekennzeichnet, dass** der Latentwärmespeicher (15) mindestens ein Latentwärmespeichermaterial mit einem Schmelzpunkt zwischen 30 °C und 60 °C aufweist.

6. Wäschetrocknungsgerät (1) nach einem der vorhergehenden Ansprüche, **dadurch gekennzeichnet, dass** der Prozessluftkanal (2,5) einen Zuluftkanal (2) von einem Zulufteinlass (3) zu der Wäschetrommel (4) und einen Abluftkanal (5) von der Wäschetrommel (4) zu einem Abluftauslass (6) aufweist und das Wärmerückgewinnungsaggregat (11) in den Abluftkanal (5) eingekoppelt ist.

7. Wäschetrocknungsgerät (1) nach Anspruch 6, **dadurch gekennzeichnet, dass** der Kühlkörper als Wärmetauscher (9) ausgestaltet ist, welcher sowohl in den Abluftkanal (5) als auch in den Zuluftkanal (2) der Heizung (8) eingekoppelt ist.

8. Wäschetrocknungsgerät (1 ) nach Anspruch 7, **dadurch gekennzeichnet, dass** die beiden Wärmetauscher (9,11) als eine Einheit ausgeführt sind.

9. Wäschetrocknungsgerät (1) nach einem der vorhergehenden Ansprüche, **dadurch gekennzeichnet, dass** der Prozessluftkanal (2,5) zumindest teilweise als Umluftkanal ausgestaltet ist.

10. Wäschetrocknungsgerät (1) nach Anspruch 9 im Kombination mit einem der Ansprüche 6 bis 8, **dadurch gekennzeichnet, dass** der Zulufteinlass (3) und der Abluftauslass (6) wahlweise öffenbar und verschließbar sind.

11. Verfahren zum Betreiben eines Wäschetrocknungsgeräts (1) nach einem der vorhergehenden Ansprüche, **dadurch gekennzeichnet, dass** es die folgenden Schritte aufweist:
(a) Anschalten der Heizung (8), bis der Wärmespeicher (15) zumindest größtenteils mit einer Wärmemenge aufgeladen ist, dann
(b) Ausschalten der Heizung (8), bis die im Wärmespeicher (15) gespeicherte Wärme zumindest größtenteils abgegeben ist.

12. Verfahren nach Anspruch 11, **dadurch gekennzeichnet, dass** der Wärmespeicher ein Latentwärmespeicher (15) ist und die aufgeladene bzw. abgegebene Wärme eine latente Wärme ist.

13. Verfahren nach Anspruch 11 oder 12, **dadurch gekennzeichnet, dass** die Schritte (a) und (b) mehrfach nacheinander wiederholt werden.

## Claims

1. Laundry drying appliance (1), comprising a rotatable laundry drum (4) and a process air channel (2, 5) having a fluid connection with the laundry drum (4), wherein the process air channel (2, 5) is equipped with a heating means (8) for heating a feed air to be fed to the laundry drum (4) and a cooling body (9) for cooling an exhaust air discharged by the laundry drum (4), **characterised in that** a heat recovery unit (11) which is able to be flowed through by the exhaust air and which is thermally conductively connected with a heat store (15) arranged adjacent to the laundry drum (4), is coupled into the process air channel (5).

2. Laundry drying appliance (1) according to claim 1, **characterised in that** the heat recovery unit comprises a heat exchanger (11), particularly an air/air heat exchanger.

3. Laundry drying appliance (1) according to one of the preceding claims, **characterised in that** the heat store (15) is arranged at a spacing of between 2 mm and 3 cm, particularly between 3 mm and 1 cm, especially approximately 5 cm, from the laundry drum.

4. Laundry drying appliance (1) according to any one of the preceding claims, **characterised in that** the heat store comprises a latent heat store (15).

5. Laundry drying appliance (1) according to claim 4, **characterised in that** the latent heat store (15) comprises at least one latent heat store material with a melting point between 30° C and 60° C.

6. Laundry drying appliance (1) according to any one of the preceding claims, **characterised in that** the process air channel (2, 5) comprises a feed air channel (2) from a feed air inlet (3) to the laundry drum (4) and an exhaust air channel (5) from the laundry drum (4) to an exhaust air outlet (6) and the heat recovery unit (11) is coupled into the exhaust air channel (5).

7. Laundry drying appliance (1) according to claim 6, **characterised in that** the cooling body is designed as a heat exchanger (9) which is coupled not only into the exhaust air channel (5), but also into the feed air channel (2) of the heating means (8).

8. Laundry drying appliance (1) according to claim 7, **characterised in that** the two heat exchangers (9, 11) are constructed as a unit.

9. Laundry drying appliance (1) according to any one of the preceding claims, **characterised in that** the process air channel (2, 5) is constructed at least partly as an air circulation channel.

10. Laundry drying appliance (1) according to claim 9 in combination with any one of claims 6 to 8, **characterised in that** the air feed inlet (3) and the exhaust air outlet (6) are selectably openable and closable.

11. Method of operating a laundry drying appliance (1) according to any one of the preceding claims, **characterised in that** it comprises the following steps:
(a) switching on the heating means (8) until the heat store (15) is charged at least to the major part with a heat quantity and then
(b) switching off the heating means (8) until the heat stored in the heat store (15) is for at least the most part delivered.

12. Method according to claim 11, **characterised in that** the heat store is a latent heat store (15) and the charged or delivered heat is a latent heat.

13. Method according to claim 11 or 12, **characterised in that** the steps (a) and (b) are repeated a plurality of times in succession.

## Revendications

1. Appareil de séchage de linge (1) présentant un tambour à linge rotatif (4) et un canal d'air de processus (2, 5) raccordé au tambour à linge (4) du point de vue fluidique, le canal d'air de processus (2, 5) étant équipé d'un chauffage (8) destiné à échauffer de l'air d'arrivée à amener au tambour à linge (4) et d'un refroidisseur (9) destiné à refroidir de l'air d'évacuation évacué par le tambour à linge (4), **caractérisé en ce qu'**un agrégat de récupération de chaleur (11) pouvant être traversé par l'air d'évacuation est couplé dans le canal d'air de processus (5), lequel agrégat est raccordé de manière thermoconductrice à un accumulateur de chaleur (15) disposé de manière voisine au tambour à linge (4).

2. Appareil de séchage de linge (1) selon la revendication 1, **caractérisé en ce que** l'agrégat de récupération comprend un échangeur de chaleur (11), notamment un échangeur de chaleur air/air.

3. Appareil de séchage de linge (1) selon l'une quelconque des revendications précédentes, **caractérisé en ce que** l'accumulateur de chaleur (15) est disposé à une distance comprise entre 2 mm et 3 cm, notamment entre 3 mm et 1 cm, spécialement d'env. 5 cm du tambour à linge (4).

4. Appareil de séchage de linge (1 ) selon l'une quelconque des revendications précédentes, **caractérisé en ce que** l'accumulateur de chaleur comprend un accumulateur de chaleur latente (15).

5. Appareil de séchage de linge (1) selon la revendication 4, **caractérisé en ce que** l'accumulateur de chaleur latente (15) présente au moins un matériau d'accumulateur de chaleur latente ayant un point de fusion compris entre 30°C et 60°C.

6. Appareil de séchage de linge (1) selon l'une quelconque des revendications précédentes, **caractérisé en ce que** le canal d'air de processus (2, 5) présente un canal d'arrivée d'air (2) allant d'une entrée d'air d'arrivée (3) vers le tambour à linge (4) et un canal d'évacuation (5) allant du tambour à linge (4) vers une sortie d'air d'évacuation (6) et **en ce que** l'agrégat de récupération de chaleur (11) est couplé dans le canal d'évacuation d'air (5).

7. Appareil de séchage de linge (1) selon la revendication 6, **caractérisé en ce que** le refroidisseur est réalisé en tant qu'échangeur de chaleur (9), lequel est couplé au chauffage (8) aussi bien dans le canal d'air d'évacuation (5) que dans le canal d'air d'arrivée (2).

8. Appareil de séchage de linge (1) selon la revendication 7, **caractérisé en ce que** les deux échangeurs de chaleur (9, 11) sont réalisés en tant qu'une unité.

9. Appareil de séchage de linge (1) selon l'une quelconque des revendications précédentes, **caractérisé en ce que** le canal d'air de processus (2, 5) est réalisé au moins en partie en tant que canal d'air de circulation.

10. Appareil de séchage de linge (1) selon la revendication 9 en combinaison avec l'une quelconque des revendications 6 à 8, **caractérisé en ce que** l'entrée d'air d'arrivée (3) et la sortie d'air d'évacuation (6) peuvent être ouvertes et fermées au choix.

11. Procédé de fonctionnement d'un appareil de séchage de linge (1) selon l'une quelconque des revendications précédentes, **caractérisé en ce qu'**il présente les étapes suivantes :
(a) mise en fonction du chauffage (8) jusqu'à ce que l'accumulateur de chaleur (15) soit chargé au moins en grande partie avec une quantité de chaleur, puis
(b) mise hors fonction du chauffage (8) jusqu'à ce que la chaleur accumulée dans l'accumulateur de chaleur (15) soit déchargée au moins en grande partie.

12. Procédé selon la revendication 11, **caractérisé en ce que** l'accumulateur de chaleur est un accumulateur de chaleur latente (15) et **en ce que** la chaleur chargée resp. déchargée est une chaleur latente.

13. Procédé selon la revendication 11 ou 12, **caractérisé en ce que** les étapes (a) et (b) sont répétées plusieurs fois de suite.
